# EUROPEAN PATENT SPECIFICATION

(11) **EP 4 327 909 B1**
(45) Date of publication and mention of the grant of the patent: **31.12.2025**
(21) Application number: 22791401.7
(22) Date of filing: 11.03.2022
(51) Int. Cl.: B01D 29/11, B01D 29/50, B01D 29/23, B01D 29/58

(54) **FILTER ELEMENT AND STRAINER**
FILTERELEMENT UND SIEB
ÉLÉMENT DE FILTRATION ET CRÉPINE

(30) Priority: 22.04.2021 JP 2021072553
(43) Date of publication of application: 28.02.2024
(73) Proprietor: YAMASHIN-FILTER CORP., Yokohama-shi, Kanagawa 231-0062 (JP)
(72) Inventor: KITAJIMA, Nobuyuki, Yokohama-shi, Kanagawa 235-0033 (JP); HOSHINO, Yukitaka, Yokohama-shi, Kanagawa 235-0033 (JP)
(74) Representative: Hasegawa, Kan
(86) International application number: PCT/JP2022/010999
(87) International publication number: WO 2022/224620

(56) References cited:
- FR-A- 590 280
- JP-A- 2004 052 817
- JP-A- H1 082 464
- JP-A- S50 132 349
- JP-A- S55 133 257
- JP-B2- 4 465 223
- JP-U- S6 428 918
- US-A1- 2003 146 149
- US-A1- 2011 017 657
- US-A1- 2011 100 892
- US-A1- 2012 291 408
- US-A1- 2020 139 271

## Description

### Technical Field

The present invention relates to a filter element and a strainer.

### Background Art

JPS 64 28918 U discloses a strainer of a cooling water supply device in which both end portions of an annular filter is supported to and mounted on a main body case that is interposed and installed in a cooling water supply circuit for circulating and supplying cooling water to a body to be cooled and has an inlet and an outlet for cooling water. Ring-shaped packings are provided on both end portions of the filter to be fitted to the main body case. The packing has elasticity and is gaplessly fitted to the main body case by the elasticity.

JP 4465223 B2 discloses a filter comprising seal parts made of photocurable resin in both end parts of a cylindrical chrysanthemum type element in the axial direction and a ring-like reinforcing member (a reinforcing sheet) having a large number of voids is installed in the inside of each seal part. The reinforcing member is preferably a reinforcing sheet having a mesh structure. Also, the reinforcing member is preferable to be made of a synthetic resin and having a ratio of the light transmittance of the reinforcing member to the light transmittance of the photocurable resin in a range of 0.7 to 1.3.

US 2003/146149 A1 discloses a filter element including an annular support body, a filter medium, which is preferably a filter paper folded in a zigzag shape, positioned on the annular support body, and end disks, which are positioned on the axial end faces of the filter medium and glued or welded to the filter medium. The filter element is characterized in that a seal carrier is provided on the support body in the vicinity of one or both end disks, and a seal, particularly an elastomer seal, is affixed to the seal carrier in an interlocking manner. The seal carrier is designed to be radially elastic. The filter of the invention is particularly suitable for filtering liquids.

### Summary of Invention

### Technical Problem

In the invention described in JPS 64 28918 U, the packing is possibly damaged by the filter when the strainer is mounted on the inside of the main body case. Damage of the packing possibly leaks unfiltered liquid from a gap between the packing and the case.

The present invention has been made in view of the circumstances, and an object of the present invention is to provide a filter element and a strainer that allow preventing elastic members provided on both ends of a filtration section from being damaged.

### Solution to Problem

The problem is solved by the teachings of the independent claims. Further embodiments are defined in the dependent claims. The invention is defined by the appended claims.

A filter element according to the present disclosure includes, for example, a cylindrical filtration section and annular elastic members. The annular elastic members are provided at both ends of the filtration section. A plate-shaped reinforcing plate is provided inside the elastic member. The reinforcing plate has an annular shape when viewed along an axis of the filtration section, or a plurality of the reinforcing plates are disposed along a circle centered on the axis when viewed along the axis.

According to the filter element according to the present disclosure, the plate-shaped reinforcing plates are provided inside the annular elastic members provided at both ends of the filtration section, and the shape of the reinforcing plate when viewed along the axis of the filtration section is the annular shape. Alternatively, the plurality of plate-shaped reinforcing plates are provided inside the annular elastic members provided at both ends of the filtration section, and the plurality of reinforcing plates are disposed along the circle centered on the axis when viewed along the axis of the filtration section. This allows preventing the elastic member from being damaged by the filtration section.

The elastic member has a groove into which an end of the filtration section is inserted. The reinforcing plate is provided at a position intersecting with a center line of the groove when the elastic member is cut on a cross-sectional surface along the axis of the filtration section. As a result, concentration of stress on an abutment portion of the bottom surface of the groove and the filtration section is avoided, and the elastic member can be prevented from being damaged.

An end on an outer peripheral side of the reinforcing plate may be bent. Accordingly, the reinforcing plate covers the bottom surface of the groove, and it is possible to more reliably prevent the elastic member from being damaged.

The filtration section may be formed using a net-like member. A distance between a bottom surface of the groove and the reinforcing plate may be larger than a pitch of the net-like member. Thus, even when a distal end of a wire rod constituting the net-like member sticks into the bottom surface of the groove, the distal end of the wire rod does not abut on the reinforcing plate. Therefore, the elastic member and the reinforcing plate can be prevented from being damaged.

The filtration section may include a cylindrical first filtration section and a cylindrical second filtration section provided on an outer side of the first filtration section. This allows increasing a filter area and extending life of the strainer.

In order to solve the problem, a strainer according to the present invention includes, for example, a filter element and a case. The filter element is provided inside the case. In a state where the filter element is provided inside the case, an end face and an outer peripheral surface of the elastic member on a side where the filtration section is not provided are pressed by the case, and thereby deformed. This allows preventing the elastic member from being damaged by the filtration section. By deforming the elastic member in two directions, a leakage of the unfiltered liquid can be reliably prevented.

The case may include a tubular portion into which the filter element is inserted. The axis of the filtration section and an axis of the tubular portion may substantially coincide. The filtration section may include a rectifying member that closes a hollow portion of the filtration section. This allows increasing a filter area and extending life of the strainer.

The rectifying member may be provided substantially at a center in a longitudinal direction of the filtration section. Thus, the strainer can be assembled without a need to pay attention to a direction of the filter element, and an assembly property is improved.

### Advantageous Effects of Invention

The present invention allows preventing the elastic members provided at both ends of the filter from being damaged.

### Brief Description of Drawings

FIG. 1 is a diagram illustrating an outline of a strainer 1.
FIG. 2 is a cross-sectional view illustrating an outline of a filter element 10.
FIG. 3 is a diagram illustrating an outline of an elastic member 12, with FIG. 3(A) being a plan view and FIG. 3(B) being a cross-sectional view cut along B-B of FIG. 3(A).
FIG. 4 is an enlarged view of a portion A of FIG. 1.
FIG. 5 is a diagram illustrating an outline of an elastic member 12A provided with reinforcing plates 14A.
FIG. 6 is a diagram illustrating an outline of an elastic member 12B provided with reinforcing plates 14B.
FIG. 7 is a diagram illustrating an outline of a filter element 10A.
FIG. 8 is a diagram illustrating an outline of a filter element 10B according to a modification.
FIG. 9 is a diagram illustrating an outline of a strainer 2.

### Description of Embodiments

Hereinafter, embodiments of the present invention will be described in detail with reference to the drawings. Although the present invention will be described with a strainer for filtering coolant liquid of a vehicle or the like including a construction machine and a filter element used for the strainer as an example, the present invention is not limited to the strainer or the filter element for filtering coolant liquid.

### First Embodiment

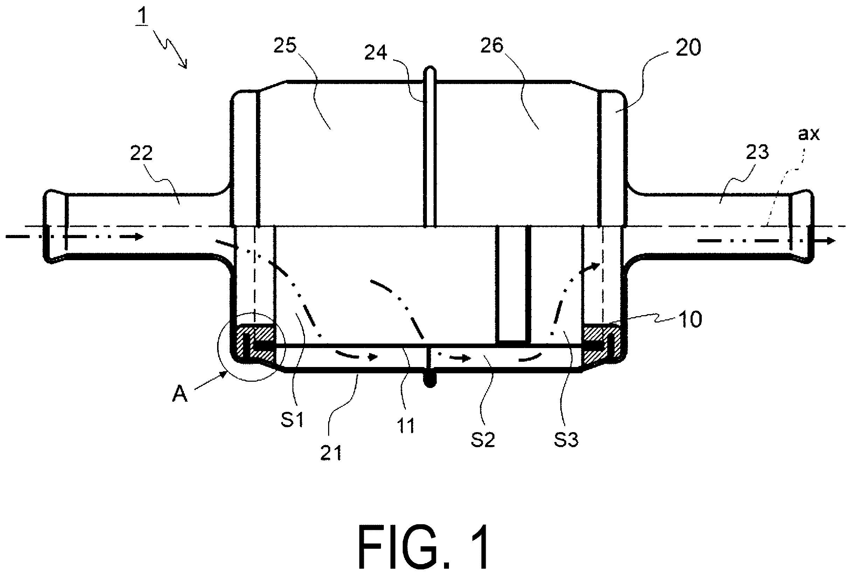

FIG. 1 is a diagram illustrating an outline of a strainer 1 according to an embodiment of the present invention. In FIG. 1, the lower half portion is illustrated in cross section. The strainer 1 mainly includes a filter element 10 and a case 20.

The filter element 10 is provided inside the case 20. The case 20 mainly includes a tubular portion 21 into which the filter element 10 is inserted, an inflow portion 22 through which coolant liquid (hereinafter referred to as liquid) flows into the tubular portion 21, and an outflow portion 23 through which the liquid flows out of the tubular portion 21. The inflow portion 22 and the outflow portion 23 have a tubular shape and have diameters smaller than that of the tubular portion 21. A hollow portion of the tubular portion 21 communicates with a hollow portion of the inflow portion 22, and the hollow portion of the tubular portion 21 communicates with a hollow portion of the outflow portion 23.

The case 20 has two components 25 and 26. The case 20 is formed by coupling the component 25 and the component 26 at a coupling portion 24. Note that the shape and the configuration of the case 20 is not limited thereto.

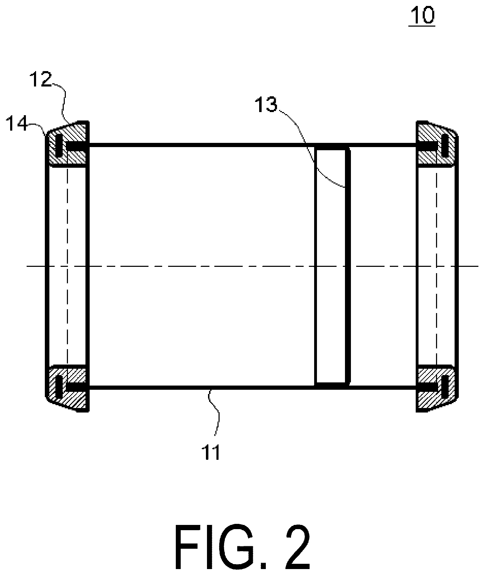

Next, the filter element 10 will be described. FIG. 2 is a cross-sectional view illustrating an outline of the filter element 10. The filter element 10 mainly includes a filtration section 11, elastic members 12, and a rectifying member 13.

The filtration section 11 has a cylindrical shape and is formed using a net-like member. The net-like member is formed in a plate shape by plain-weaving or twill-weaving a wire rod. In the present embodiment, the net-like member is a wire mesh made of metal, but may be made of resin. When the net-like member is made of resin, voids only need to be two dimensionally arranged like a wire mesh.

The net-like member has any mesh size. For example, the one having a pitch of 0.17 mm to 0.5 mm is used for the filtration section 11. Here, the pitch is a length from the center of the line constituting the net-like member to the center of the adjacent line. In the wire mesh, a unit referred to as mesh indicating the number of openings in 1 inch (25.4 mm) is also generally used, and in the present embodiment, the one of 50 meshes to 150 meshes is used for the filtration section 11.

The filtration section 11 is provided with the rectifying member 13. The rectifying member 13 closes a hollow portion of the filtration section 11. In the present embodiment, the rectifying member 13 has a flat plate shape, but the shape of the rectifying member 13 is not limited to this. For example, the rectifying member 13 may have a conical shape or a truncated conical shape protruding toward the inflow portion 22.

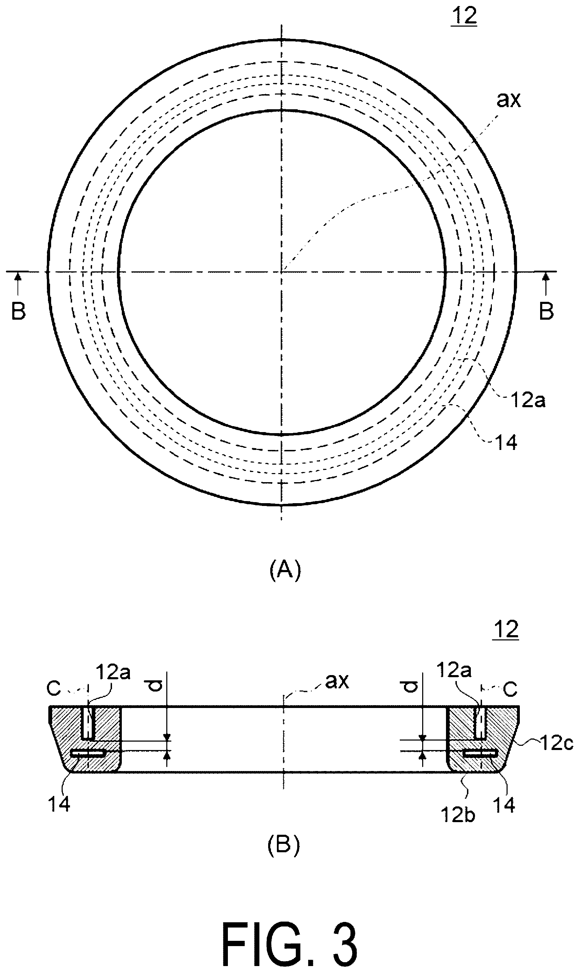

The elastic member 12 has an annular shape and is provided at each of both ends of the filtration section 11. FIG. 3 is a diagram illustrating an outline of the elastic member 12, with FIG. 3(A) being a plan view and FIG. 3(B) being a cross-sectional view cut along B-B of FIG. 3(A).

The elastic member 12 is formed with a groove 12a into which the end of the filtration section 11 is inserted. The groove 12a has an annular shape when viewed along an axis ax of the filtration section 11 and the elastic members 12. A reinforcing plate 14 is provided inside the elastic member 12. The reinforcing plate 14 has a plate shape and has an annular shape when viewed along the axis ax. In the present embodiment, the reinforcing plate 14 is made of metal (for example, iron), but the material of the reinforcing plate 14 is not limited to metal and may be resin. Note that in FIG. 3, hatching indicating the cross section is omitted as for the reinforcing plate 14.

As illustrated in FIG. 3(B), the reinforcing plate 14 is provided at a position intersecting with a center line C of the groove 12a when the elastic member 12 is cut on the cross-sectional surface along the axis ax of the filtration section 11. A distance d between the groove 12a and the reinforcing plate 14 is larger than the pitch of the net-like member.

The description will now return to FIG. 1. The strainer 1 is manufactured by inserting the filter element 10 into one of the component 25 and the component 26, covering the filter element 10 with the other component 25 or component 26, and coupling the component 25 and the component 26 at the coupling portion 24. When the component 25 and the component 26 are integrated, the case 20 presses the elastic members 12, and the elastic members 12 are brought into close contact with the case 20. In a state where the strainer 1 is assembled, the axis of the filtration section 11 and the axis of the tubular portion 21 substantially coincide, and are indicated by the axis ax in FIG. 1.

FIG. 1 indicates a flow of liquid by the two-dot chain line. The liquid flows into the strainer 1 from the inflow portion 22. Since the filter element 10 is provided inside the tubular portion 21, the liquid flows from the inflow portion 22 into a hollow portion S1 of the filter element 10. Since the rectifying member 13 is provided, the liquid that has flowed into the hollow portion S1 passes through the filtration section 11 and flows into a space S2 between the filter element 10 and the tubular portion 21.

The liquid that has flowed into the space S2 passes through the filtration section 11 again and flows into a hollow portion S3 of the filter element 10. The liquid that has flowed into the hollow portion S3 flows out of the strainer 1 from the outflow portion 23. In this way, by employing the structure in which the liquid passes through the filtration section 11 twice, the filter area can be increased.

In addition, since the elastic members 12 are provided at both ends of the filtration section 11 and the elastic members 12 are in close contact with the case 20, liquid that is unfiltered (unfiltered liquid) does not leak from between the elastic member 12 and the case 20. For example, in a case where the elastic member 12 is not provided and the filtration section 11 is bonded to the case 20, an adhesive (for example, epoxy resin) is peeled off due to insufficient heat resistance and chemical resistance and unfiltered liquid possibly leaks. However, by providing the elastic members 12 at both ends of the filtration section 11, a leakage of unfiltered liquid can be prevented.

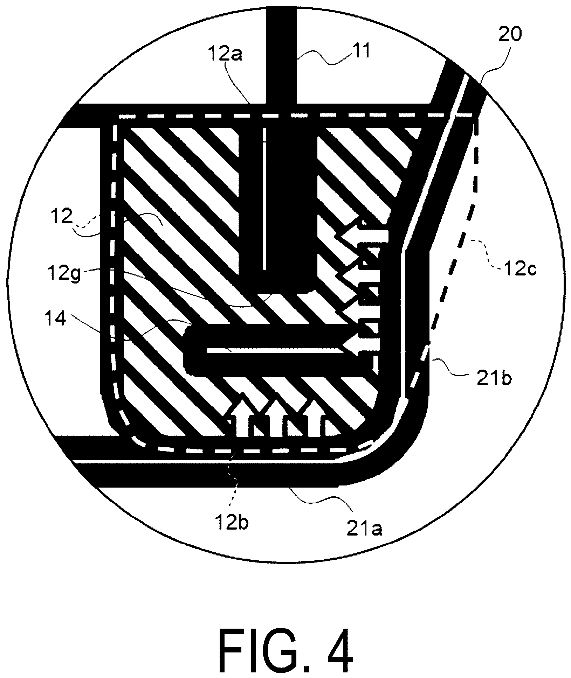

FIG. 4 is an enlarged view of a portion A of FIG. 1. In a state where the strainer 1 is assembled by providing the filter element 10 inside the case 20, the elastic members 12 deform by being pressed by the case 20. FIG. 4 indicates the shape of the elastic member 12 before the deformation by the dotted line.

To be specific, an end face 12b and an outer peripheral surface 12c of the elastic member 12 on the side where the filtration section 11 is not provided are pressed by the case 20 to deform. As a result, as indicated by the white arrows in FIG. 4, a compressive force acts on the elastic member 12 in a direction substantially perpendicular to the surface of the reinforcing plate 14 and a direction substantially parallel to the surface of the reinforcing plate 14.

The end face 12b is pressed by a surface 21a of the tubular portion 21. Therefore, a force is applied to the reinforcing plate 14 in a direction substantially perpendicular to the end face 12b and the surface 21a, that is, a direction substantially perpendicular to the surface of the reinforcing plate 14, and thus the reinforcing plate 14 is pressed against the filtration section 11. Assume that the reinforcing plate 14 is not provided, stress concentrates on an abutment portion between a bottom surface 12g of the groove 12a and the filtration section 11, and the end face of the filtration section 11 possibly damages the elastic member 12. On the other hand, by providing the reinforcing plate 14, the concentration of the force on the bottom surface of the groove 12a is avoided, and the elastic member 12 is prevented from being damaged.

According to the present embodiment, by providing the reinforcing plate 14 inside the elastic member 12, damage of the elastic member 12 can be prevented. As a result, a leakage of unfiltered liquid can be prevented.

In addition, according to the present embodiment, when the elastic member 12 is cut on the cross-sectional surface along the axis ax of the filtration section 11, the reinforcing plate 14 intersects the center line C of the groove 12a. Therefore, concentration of stress on the abutment portion between the bottom surface 12g and the filtration section 11 can be effectively prevented.

Further, according to the present embodiment, since the distance d between the groove 12a and the reinforcing plate 14 is larger than the pitch of the net-like member, even when the wire rod constituting the net-like member sticks into the elastic member 12, abutment of the wire rod into the reinforcing plate 14 can be avoided. For example, when a force is applied to the bottom surface of the groove 12a in a state where the wire rod constituting the net-like member is exposed to the end face of the filtration section 11 and the cross-sectional surface of the wire rod abuts on the bottom surface of the groove 12a, the distal end of the thin wire rod possibly sticks into the bottom surface of the groove 12a (However, the possibility is low as the reinforcing plate 14 prevents the stress concentration). Even when the distal end of the wire rod sticks into the bottom surface of the groove 12a, the wire rod does not abut on the reinforcing plate 14 as long as the distance d is configured to be larger than the pitch of the net-like member. Therefore, damage of the elastic member 12 and the reinforcing plate 14 can be prevented.

Further, according to the present embodiment, since the end face 12b and the outer peripheral surface 12c of the elastic member 12 are pressed by the case 20 and the elastic member 12 deforms in the radial direction and the thickness direction, a leakage of unfiltered liquid can be reliably prevented.

In addition, according to the present embodiment, since the rectifying member 13 is provided in the filtration section 11, the filter area can be increased. As a result, the life of the strainer 1 can be extended.

In the present embodiment, as illustrated in FIG. 2, the rectifying member 13 is biased to the downstream side, but the position of the rectifying member 13 is not limited thereto. The rectifying member 13 can be installed at any position, thereby ensuring adjusting a filter area of unfiltered liquid. For example, the rectifying member 13 may be disposed substantially at the center in the longitudinal direction of the filtration section 11. Thus, the strainer 1 can be assembled without a need to pay attention to the direction of the filter element 10, and the assembly property is improved.

Further, in the present embodiment, the distance d between the groove 12a and the reinforcing plate 14 is larger than the pitch of the net-like member, but more preferably, the distance d may be twice or more of the pitch of the net-like member. By setting the distance d to be twice or more of the pitch of the net-like member, a leakage of liquid due to damage of the elastic member 12 can be reliably prevented.

In the present embodiment, the filtration section 11 is provided in the groove 12a, but the filtration section 11 is not limited to be provided in the groove. For example, a substantially L-shaped notch may be provided, and the filtration section 11 may be provided along the outer peripheral surface of the notch. In this case, the reinforcing plate 14 is preferably provided on the extension line of the outer peripheral surface of the notch.

In addition, in the present embodiment, the cross-sectional shape of the reinforcing plate 14 when the elastic member 12 is cut on the cross-sectional surface along the axis ax of the filtration section 11 is the flat plate shape, but the reinforcing plate 14 only needs to have a plate shape, and the shape of the reinforcing plate 14 is not limited to the flat plate shape. For example, the cross-sectional shape of the reinforcing plate when cut on the cross-sectional surface along the axis ax may be an arc shape that projects toward the end face 12b.

Further, in the present embodiment, the center line C of the groove 12a is substantially orthogonal to the reinforcing plate 14, but the arrangement of the reinforcing plate 14 is not limited thereto. However, it is desirable that the reinforcing plate 14 is substantially parallel to the end face 12b. For example, when the end face 12b and the surface 21a are inclined with respect to the line substantially orthogonal to the center line C, it is desirable that the reinforcing plate 14 is also inclined with respect to the line substantially orthogonal to the center line C.

### Second Embodiment

Although the reinforcing plate 14 has the annular shape in the first embodiment of the present invention, the configuration of the reinforcing plate is not limited to this. For example, the elastic member 12 may be provided with a plurality of reinforcing plates, and the plurality of reinforcing plates may be disposed along a circle centered on the axis ax when viewed along the axis ax. Hereinafter, a configuration in which the plurality of reinforcing plates are disposed along the circle centered on the axis ax will be described.

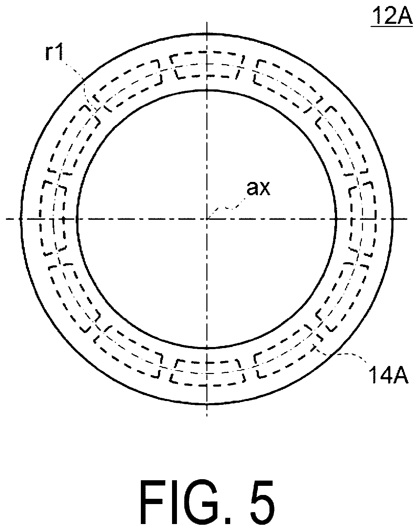

FIG. 5 is a diagram illustrating an outline of an elastic member 12A provided with reinforcing plates 14A according to a modification. A plurality of the reinforcing plates 14A are provided with the inside of the elastic member 12A. The reinforcing plate 14A has a partial annular shape, and the plurality of reinforcing plates 14A are disposed along a circle r1 centered on the axis ax.

According to the present embodiment, providing the reinforcing plates 14A allows preventing concentration of a force on the bottom surface of the groove 12a, thereby allowing preventing damage of the elastic members 12A provided at both ends of the filtration section 11.

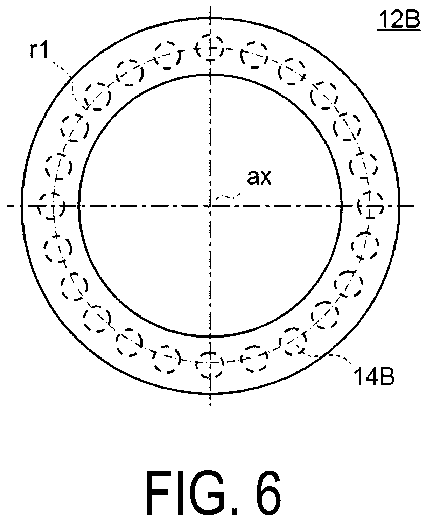

The configuration of the reinforcing plate is not limited to the partial annular shape. FIG. 6 is a diagram illustrating an outline of an elastic member 12B provided with reinforcing plates 14B according to a modification. A plurality of the reinforcing plates 14B are provided with the inside of the elastic member 12B. The reinforcing plate 14B may have a circular shape, and the plurality of reinforcing plates 14B may be disposed along the circle r1. This allows preventing concentration of a force on the bottom surface of the groove 12a, thereby allowing preventing damage of the elastic member 12B.

### Third Embodiment

In the first embodiment of the present invention, the filter element has one filtration section, but the number of filtration sections is not limited to one. For example, the filter element may have a plurality of filtration sections. Hereinafter, a configuration in which the filter element includes two filtration sections will be described.

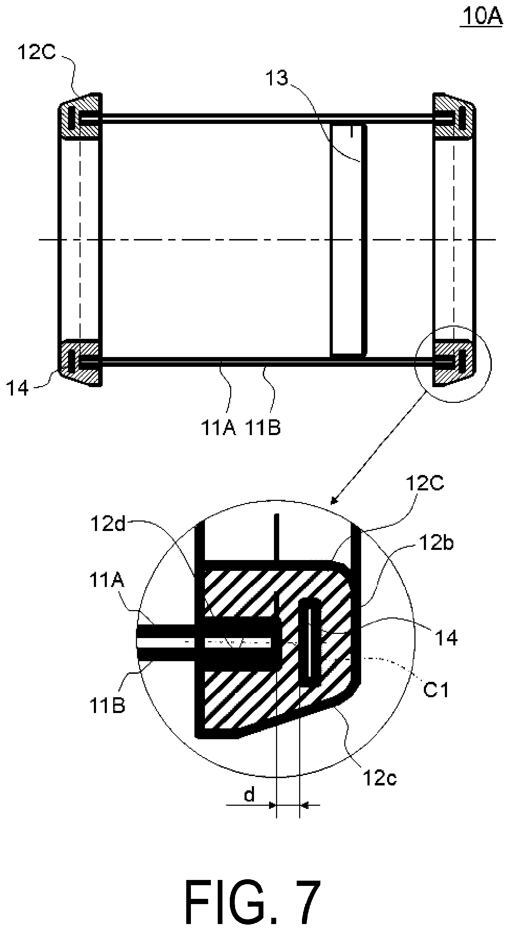

FIG. 7 is a diagram illustrating an outline of a filter element 10A according to the second embodiment. The filter element 10A and the case 20 constitute a strainer. The filter element 10A is provided inside the case 20.

The filter element 10A mainly includes filtration sections 11A and 11B, elastic members 12C, and the rectifying member 13.

The filtration sections 11A and 11B have a cylindrical shape similarly to the filtration section 11, and are formed using net-like members. The filtration sections 11A and 11B and the filtration section 11 differ in the diameter.

The filtration section 11B is provided on an outer side of the filtration section 11A. The pitch (mesh) of the filtration section 11A and the pitch (mesh) of the filtration section 11B may be the same or different. When the pitch of the filtration section 11A and the pitch of the filtration section 11B are differentiated, it is desirable that the pitch of the filtration section 11B disposed on the outer side is configured to be larger and the pitch of the filtration section 11A disposed on the inner side is configured to be smaller.

The elastic members 12C have an annular shape similarly to the elastic members 12, and are provided at respective both ends of the filtration sections 11A and 11B. The elastic member 12C is formed with a groove 12d into which ends of the filtration sections 11A and 11B are inserted. The difference between the groove 12d and the groove 12a is only the width.

The reinforcing plate 14 is provided at a position intersecting with a center line C1 of the groove 12d when the elastic member 12C is cut on the cross-sectional surface along the axis ax of the filtration sections 11A and 11B. Therefore, concentration of stress on the bottom surface of the groove 12d is prevented, and damage of the elastic member 12C is prevented.

According to the present embodiment, providing the two filtration sections 11A and 11B allows increasing the filter area and extending the life. In addition, changing the coarseness (pitch) of the filtration section 11A and the filtration section 11B and reducing the pitch of the filtration section 11B allows improving filter accuracy.

Although the two filtration sections 11A and 11B are inserted into a groove 11d in the present embodiment, the respective filtration sections 11A and 11B may be inserted into different grooves.

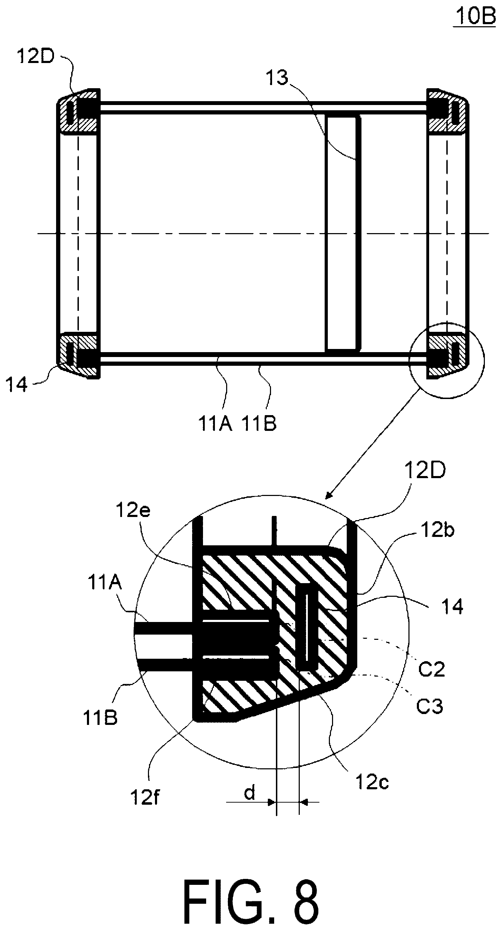

FIG. 8 is a diagram illustrating an outline of a filter element 10B according to a modification. The filter element 10B and the case 20 constitute a strainer. The filter element 10B is provided inside the case 20.

The filter element 10B mainly includes the filtration sections 11A and 11B, elastic members 12D, and the rectifying member 13.

The elastic members 12D have an annular shape similarly to the elastic members 12, and are provided at respective both ends of the filtration sections 11A and 11B. The elastic member 12D is formed with a groove 12e into which the end of the filtration section 11A is inserted, and a groove 12f into which the end of the filtration section 11B is inserted.

The reinforcing plate 14 is provided at a position intersecting with a center line C2 of the groove 12e and a center line C3 of the groove 12f when the elastic member 12D is cut on the cross-sectional surface along the axis ax of the filtration sections 11A and 11B. Therefore, concentration of stress on the bottom surfaces of the grooves 12e and 12f is prevented, and damage of the elastic member 12D is prevented.

### Fourth Embodiment

In the first embodiment of the present invention, the cross-sectional shape of the reinforcing plate 14 when the elastic member 12 is cut on the cross-sectional surface along the axis ax of the filtration section 11 is the flat plate shape, but the shape of the reinforcing plate 14 is not limited to the flat plate shape.

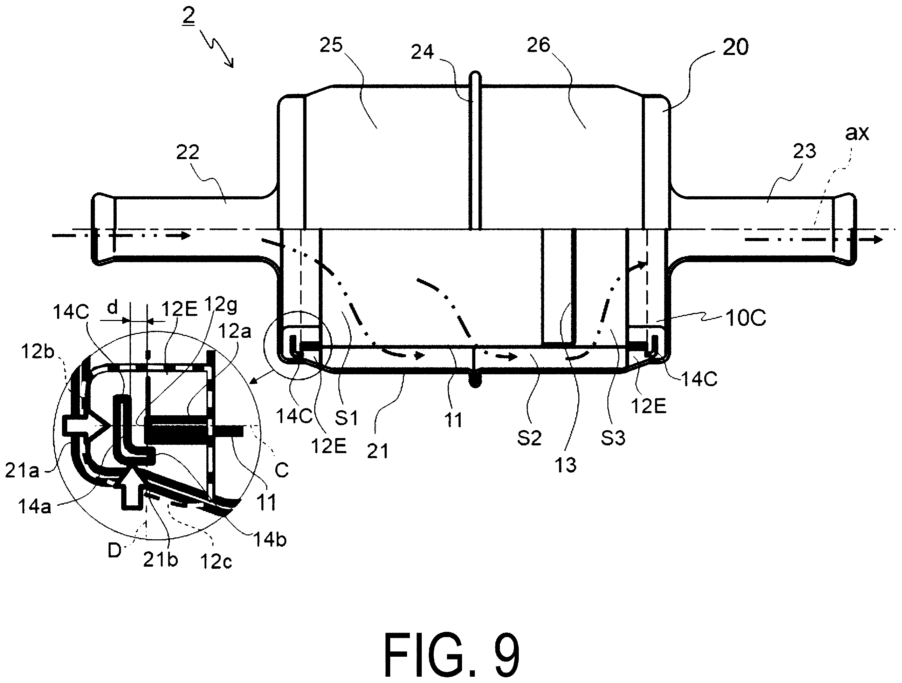

FIG. 9 is a diagram illustrating an outline of a strainer 2 according to an embodiment of the present invention. FIG. 9 illustrates is the cross section of the lower half, and hatching indicating the cross section is omitted. The strainer 2 mainly includes a filter element 10C and the case 20. The filter element 10C is provided inside the case 20.

The filter element 10C mainly includes the filtration section 11, elastic members 12E, and the rectifying member 13. The elastic members 12E have an annular shape similarly to the elastic members 12, and are provided at respective both ends of the filtration section 11.

The elastic member 12E is formed with the groove 12a into which the end of the filtration section 11 is inserted. A plate-shaped reinforcing plate 14C is provided inside the elastic member 12E. The reinforcing plate 14C has an annular shape when viewed along the axis ax of the filtration section 11 and the elastic member 12. In the present embodiment, the reinforcing plate 14C is made of metal (for example, iron), but the material of the reinforcing plate 14C is not limited to metal and may be resin.

An end on the outer peripheral side of the reinforcing plate 14C is bent. The reinforcing plate 14C includes a plate-like portion 14a substantially parallel to the end face 12b and a plate-like portion 14b located on the outer peripheral side of the plate-like portion 14a and bent with respect to the plate-like portion 14b. Since the end on the outer peripheral side is bent, the reinforcing plate 14C covers the bottom surface 12g of the groove 12a.

The plate-like portion 14a is provided at a position intersecting with the center line C when the elastic member 12E is cut on the cross-sectional surface along the axis ax of the filtration section 11. The distance d between the groove 12a and the reinforcing plate 14 is larger than the pitch of the net-like member.

The plate-like portion 14b is provided at a position intersecting with an extension line D of the bottom surface 12g when the elastic member 12E is cut on the cross-sectional surface along the axis ax of the filtration section 11.

In a state where the strainer 2 is assembled by providing the filter element 10 inside the case 20, the elastic members 12E deform by being pressed by the case 20.

When the end face 12b is pressed by the surface 21a, a force in a direction substantially orthogonal to the surface of the plate-like portion 14a (see the white arrow in FIG. 9) is applied to the plate-like portion 14a, and thus the plate-like portion 14a is pressed against the filtration section 11. At this time, the plate-like portion 14a avoids concentration of stress on the abutment portion of the bottom surface 12g and the filtration section 11, and thus the elastic member 12E is prevented from being damaged.

When the outer peripheral surface 12c is pressed by a surface 21b, a force in a direction substantially parallel to the surface of the plate-like portion 14a (see the white arrow in FIG. 9) is applied to the plate-like portion 14a, and thus the plate-like portion 14b is pressed against the filtration section 11. At this time, the plate-like portion 14b avoids concentration of a force on a corner between the bottom surface 12g and the inner peripheral surface of the groove 12a, and thus the elastic member 12E is prevented from being damaged.

According to the present embodiment, providing the reinforcing plate 14C whose outer peripheral side end is bent so as to cover the bottom surface of the groove 12a inside the elastic member 12E allows more reliably preventing the elastic member 12E from being damaged. In particular, even when a plurality of compressive forces in different directions are applied to the elastic member 12E, concentration of stress by the respective forces on the vicinity of the bottom surface 12g can be avoided.

In the present embodiment, the end on the outer peripheral side of the reinforcing plate 14C is bent, and the angle (the angle formed by the plate-like portion 14a and the plate-like portion 14b) is substantially a right angle. However, the bending angle of the end on the outer peripheral side of the reinforcing plate is not limited to 90°.

The embodiments of the invention are described above in detail with reference to the drawings. However, specific configurations are not limited to the embodiments and also include changes in design or the like without departing from the gist of the invention. For example, in the examples described above, detailed description is made to facilitate understanding of the present invention, and the examples are not necessarily limited to examples including all the configurations described above. In addition, the configuration of an embodiment can be replaced partially with the configurations of other embodiments. In addition, addition, deletion, replacement or the like of other configurations can be made on the configurations of the embodiments.

In addition, the term "substantially" is not to be understood as merely being strictly the same, and is a concept that includes errors and modifications to an extent that does not result in loss in identity. For example, the "substantially cylindrical shape" is a concept that includes a case where, for example, the shape can be placed in the same category as the cylindrical shape, and is not strictly limited to the cylindrical shape. Further, simple expressions such as orthogonal, parallel, and identical are not to be understood as merely being strictly, for example, orthogonal, parallel, and identical, and include being, for example, substantially parallel, substantially orthogonal, and substantially identical.

In addition, the term "vicinity" means to include a range of regions (which can be determined as desired) near a position serving as a reference. For example, the term "a vicinity of an end" refers to a range of regions in the vicinity of the end, and is a concept indicating that the end may or need not be included.

### Reference Signs List

1, 2: Strainer
10, 10A, 10B, 10C: Filter element
11, 11A, 11B: Filtration section
11d: Groove
12, 12A, 12B, 12C, 12D, 12E: Elastic member
12a, 12d, 12e, 12f: Groove
12b: End face
12c: Outer peripheral surface
12g: Bottom surface
13: Rectifying member
14, 14A, 14B, 14C: Reinforcing plate
14a, 14b: Plate-like portion
20: Case
21: Tubular portion
21a, 21b: Surface
22: Inflow portion
23: Outflow portion
24: Coupling portion
25, 26: Component

## Claims

1. A filter element (10, 10A, 10B, 10C), comprising:
a cylindrical filtration section (11, 11A, 11B); and
annular elastic members (12, 12A, 12B, 12C, 12D, 12E) provided at both ends of the filtration section, wherein
a plate-shaped reinforcing plate (14, 14A, 14B, 14C) is provided inside the elastic member; and
the reinforcing plate has an annular shape when viewed along an axis (ax) of the filtration section, or a plurality of the reinforcing plates are disposed along a circle centered on the axis when viewed along the axis, wherein
the elastic member has a groove (12a) into which an end of the filtration section is inserted; and
the reinforcing plate is provided at a position intersecting with a center line (C) of the groove when the elastic member is cut on a cross-sectional surface along the axis of the filtration section.

2. The filter element according to claim 1, wherein
an end on an outer peripheral side of the reinforcing plate is bent.

3. The filter element according to claim 1 or 2, wherein
the filtration section is formed using a net-like member; and
a distance (d) between a bottom surface of the groove and the reinforcing plate is larger than a pitch of the net-like member.

4. The filter element according to any one of claims 1 to 3, wherein
the filtration section includes a cylindrical first filtration section (11A) and a cylindrical second filtration section (11B) provided on an outer side of the first filtration section.

5. A strainer (1, 2), comprising:
the filter element according to any one of claims 1 to 4; and
a case (20) inside of which the filter element is provided, wherein
in a state where the filter element is provided inside the case, an end face (12b) and an outer peripheral surface (12c) of the elastic member on a side where the filtration section is not provided are pressed by the case, and thereby deformed.

6. The strainer according to claim 5, wherein
the case includes a tubular portion (21) into which the filter element is inserted;
the axis of the filtration section and an axis (ax) of the tubular portion substantially coincide; and
the filtration section includes a rectifying member (13) that closes a hollow portion of the filtration section.

7. The strainer according to claim 6, wherein
the rectifying member is provided substantially at a center in a longitudinal direction of the filtration section.

## Patentansprüche

1. Filterelement (10, 10A, 10B, 10C), umfassend:
einen zylindrischen Filtrationsabschnitt (11, 11A, 11B); und
ringförmiges elastisches Glied (12, 12A, 12B, 12C, 12D, 12E), die an beiden Enden des Filtrationsabschnitts bereitgestellt sind, wobei
eine plattenförmige Verstärkungsplatte (14, 14A, 14B, 14C) innerhalb des elastischen Glieds bereitgestellt ist; und
die Verstärkungsplatte eine ringförmige Form aufweist, wenn sie entlang einer Achse (ax) des Filtrationsabschnitts betrachtet wird, oder eine Vielzahl der Verstärkungsplatten entlang eines Kreises angeordnet ist, der auf der Achse zentriert ist, wenn er entlang der Achse betrachtet wird, wobei
das elastische Glied eine Nut (12a) aufweist,
in die ein Ende des Filtrationsabschnitts eingesetzt ist; und
die Verstärkungsplatte an einer Position bereitgestellt ist, die sich mit einer Mittellinie (C) der Nut kreuzt, wenn das elastische Glied an einer Querschnittsfläche entlang der Achse des Filtrationsabschnitts geschnitten ist.

2. Filterelement nach Anspruch 1, wobei
ein Ende an einer Außenumfangsseite der Verstärkungsplatte gebogen ist.

3. Filterelement nach Anspruch 1 oder 2, wobei
der Filtrationsabschnitt unter Verwendung eines netzartigen Glieds gebildet ist; und ein Abstand (d) zwischen einer unteren Oberfläche der Nut und der Verstärkungsplatte größer ist als eine Teilung des netzartigen Glieds.

4. Filterelement nach einem der Ansprüche 1 bis 3, wobei
der Filtrationsabschnitt einen zylindrischen ersten Filtrationsabschnitt (11A) und einen zylindrischen zweiten Filtrationsabschnitt (11B) beinhaltet, der an einer Außenseite des ersten Filtrationsabschnitts bereitgestellt ist.

5. Sieb (1, 2), umfassend:
das Filterelement nach einem der Ansprüche 1 bis 4; und
ein Gehäuse (20), in dessen Innerem das Filterelement bereitgestellt ist, wobei
in einem Zustand, in dem das Filterelement im Inneren des Gehäuses bereitgestellt ist, eine Endfläche (12b) und eine äußere Umfangsfläche (12c) des elastischen Glieds auf einer Seite, auf der der Filtrationsabschnitt nicht bereitgestellt ist, durch das Gehäuse gedrückt und dadurch verformt werden.

6. Sieb nach Anspruch 5, wobei
das Gehäuse einen rohrförmigen Teil (21) beinhaltet, in den das Filterelement eingesetzt ist;
die Achse des Filtrationsabschnitts und eine Achse (ax) des rohrförmigen Teils im Wesentlichen zusammenfallen; und
der Filtrationsabschnitt ein Rektifizierglied (13) beinhaltet, das einen hohlen Abschnitt des Filtrationsabschnitts schließt.

7. Sieb nach Anspruch 6, wobei
das Rektifizierglied im Wesentlichen an einer Mitte in einer Längsrichtung des Filtrationsabschnitts bereitgestellt ist.

## Revendications

1. Élément filtrant (10, 10A, 10B, 10C), comprenant :
une section de filtration cylindrique (11, 11A, 11B) ; et
des éléments élastiques annulaires (12, 12A, 12B, 12C, 12D, 12E) disposés aux deux extrémités de la section de filtration, dans lequel
une plaque de renforcement en forme de plaque (14, 14A, 14B, 14C) est disposée à l'intérieur de l'élément élastique ; et
la plaque de renforcement présente une forme annulaire lorsqu'elle est vue le long d'un axe (ax) de la section de filtration, ou une pluralité de plaques de renforcement sont disposées le long d'un cercle centré sur l'axe lorsqu'elles sont vues le long de l'axe, dans lequel
l'élément élastique présente une rainure (12a) dans laquelle une extrémité de la section de filtration est insérée ; et
la plaque de renforcement est disposée au niveau d'une position coupant une ligne centrale (C) de la rainure lorsque l'élément élastique est coupé sur une surface transversale le long de l'axe de la section de filtration.

2. Élément filtrant selon la revendication 1, dans lequel
une extrémité sur un côté périphérique externe de la plaque de renforcement est pliée.

3. Élément filtrant selon la revendication 1 ou 2, dans lequel
la section de filtration est formée à l'aide d'un élément en forme de filet ; et
une distance (d) entre une surface inférieure de la rainure et la plaque de renforcement est plus grande qu'un pas de l'élément en forme de filet.

4. Élément filtrant selon l'une quelconque des revendications 1 à 3, dans lequel
la section de filtration comprend une première section de filtration cylindrique (11A) et une seconde section de filtration cylindrique (11B) disposée sur un côté externe de la première section de filtration.

5. Crépine (1, 2), comprenant :
l'élément filtrant selon l'une quelconque des revendications 1 à 4 ; et
un boîtier (20) à l'intérieur duquel l'élément filtrant est disposé, dans laquelle
dans un état où l'élément filtrant est disposé à l'intérieur du boîtier, une face d'extrémité (12b) et une surface périphérique externe (12c) de l'élément élastique sur un côté où la section de filtration n'est pas disposée sont pressées par le boîtier, et ainsi déformées.

6. Crépine selon la revendication 5, dans laquelle
le boîtier comprend une partie tubulaire (21) dans laquelle l'élément filtrant est inséré ;
l'axe de la section de filtration et un axe (ax) de la partie tubulaire coïncident sensiblement ; et
la section de filtration comprend un élément de rectification (13) qui ferme une partie creuse de la section de filtration.

7. Crépine selon la revendication 6, dans laquelle
l'élément de rectification est disposé sensiblement au niveau d'un centre dans une direction longitudinale de la section de filtration.
